# FASCICULE DE BREVET EUROPEEN

(11) **EP 1 433 976 B1**
(45) Date de publication et mention de la délivrance du brevet: **14.02.2007**
(21) Numéro de dépôt: 03293256.8
(22) Date de dépôt: 19.12.2003
(51) Int. Cl.: F16H 3/093, F16H 63/08

(54) **Dispositif de commande interne de boite de vitesses**
Steuervorrichtung für ein Getriebe
Control device for a transmission

(30) Priorité: 23.12.2002 FR 0214301
(43) Date de publication de la demande: 30.06.2004
(73) Titulaire: Renault s.a.s., 92100 Boulogne Billancourt (FR)
(72) Inventeur: Raoul, Michel, 78990 Elancourt (FR)

(56) Documents cités:
- DE-A- 3 037 990
- DE-A- 10 101 597
- DE-A- 10 108 881
- FR-A- 2 802 600
- GB-A- 483 069

## Description

La présente invention se rapporte à la commande interne des boîtes de vitesses mécaniques.

Plus précisément, cette invention concerne un dispositif de commande interne de boîte de vitesses mécanique munie d'un premier et d'un second embrayage d'entrée contrôlant respectivement la transmission du couple moteur vers un premier et un second arbre primaire concentriques portant des pignons fixes, de deux arbres secondaires portant des pignons fous entraînés respectivement par le premier et par le second arbre primaire, et de moyens de crabotage des pignons fous actionnés par un ensemble de fourchettes.

Cette invention concerne aussi un procédé de commande d'une boîte de vitesses au moyen d'un tel dispositif.

Elle trouve une application privilégiée sur une boîte de vitesses à commande automatisée ou robotisée, c'est à dire dont l'ensemble des actionneurs, de commande d'embrayage, de sélection et d'engagement des rapports est placé sous le contrôle d'un calculateur prenant tout ou partie des décisions de commande à la place du conducteur.

Certaines boîtes de vitesses de véhicule automobile possèdent deux voies parallèles de flux de couple ayant des étages de démultiplication pouvant être insérés ou séparés dudit flux de couple et entre lesquels la transmission du couple peut être réalisé continûment.

On connaît des exemples de transmissions dites "transmissions à deux embrayages", dans lesquelles deux voies parallèles de transmission peuvent être couplées indépendamment au moteur par deux embrayages respectifs. Le document FR 2 802 600 décrit un exemple d'une telle boîte de vitesses. Le document DE 101 08 881 A décrit un autre exemple d'une telle boîte de vitesses selon le préambule des revendications 1 et 8

Pour assurer la continuité du flux de couple, dans ce type de transmission, il faut que les deux parties de la transmission, regroupant respectivement les étages de démultiplication de rang impair et l'autre les étages de démultiplication de rang pair puissent être commutées simultanément. Par exemple, pour réaliser la commutation du rapport de première au rapport de deuxième, l'étage de démultiplication du rapport de première est inséré dans la première voie de transmission de couple de la première transmission partielle, dont l'embrayage d'entrée est fermé, et l'étage de démultiplication du rapport de deuxième est inséré dans deuxième la voie de transmission, dont l'embrayage d'entrée est ouvert. Les deux embrayages sont alors actionnés simultanément, de manière à ce que celui qui était initialement ouvert soit fermé, et inversement.

Pour réaliser des commutations avec transmission continue du couple, il est indispensable de pouvoir réaliser indépendamment, pour chaque « voie de transmission », l'insertion ou la désinsertion d'un étage de démultiplication et l'actionnement de l'embrayage. Pour cette raison, chacune des voies de transmission dispose d'un actionneur particulier pour la sélection et l'engagement des rapports et d'un autre actionneur dédié à l'embrayage.

L'inconvénient d'une telle disposition est la présence de deux actionneurs pour commuter les étages de démultiplication dans les deux voies de la transmission, et de deux autres actionneurs pour commuter les embrayages. La transmission correspondante est ainsi lourdement pénalisée en raison de son encombrement important et de ses coûts de fabrication élevés.

L'invention vise à remédier à ces inconvénients en proposant un dispositif de commande de boîte de vitesses comprenant un double système de commande selon la revendication 1 pour réaliser l'ensemble des commutations des étages de démultiplication et des embrayages et, en proposant un procédé de commande de boîte de vitesse selon la revendication 8.

Plus précisément, ce dispositif comporte deux systèmes de commande indépendants dont le premier assure l'actionnement du second embrayage et la commutation des rapports dépendants du premier arbre primaire, et dont le second assure l'actionnement du premier embrayage et la commutation des rapports dépendants du second arbre primaire.

Selon une autre caractéristique de l'invention, ce dispositif comporte deux axes munis de crabots de manoeuvre des embrayages actionnés par les mêmes doigts de commande que les fourchettes, ces fourchettes pouvant être actionnées directement par des doigts de commande ou par l'intermédiaire de basculeurs.

Avec un tel dispositif, la séquence type de passage d'un rapport donné au rapport immédiatement supérieur est pour l'essentiel une suite de mouvements de rotation et de translation faisant intervenir par exemple les deux systèmes de commande de la façon suivante : au début de toute séquence, les doigts des deux actionneurs sont au repos sur la ligne de sélection des deux crabots de commande d'embrayages et les deux embrayages sont fermés, et en fin de séquence les doigts des deux actionneurs sont à nouveau au repos sur la ligne de sélection des deux crabots de commande d'embrayage, et les deux embrayages sont fermés.

Une séquence type de passage d'un rapport N de rang impair au rapport pair N + 1 immédiatement supérieur de rang pair, peut par exemple être la suivante :
a) pendant que le moteur entraîne le véhicule sur le rapport de N :
b) le premier système de commande ouvre le second embrayage E₂ (dédié aux rapports pairs),
   - le second système de commande sélectionne la ligne des rapports X-N+1 et engage le rapport N+1 pair,
   - le second système de commande sélectionne la ligne neutre intermédiaire (N1 ou N2), oriente le doigt, et sélectionne la ligne des embrayages E₁-E₂,
c) l'unité centrale de commande des actionneurs change le rapport :
   - le second système de commande ouvre le premier embrayage E₁, et
   - simultanément le premier système de commande ferme le second embrayage E₂.
c) l'unité centrale de commande des actionneurs désengage le rapport N :
   - le premier système de commande sélectionne la ligne neutre intermédiaire (N1 ou N2), oriente le doigt de commande, et sélectionne la ligne Y-N,
   - le premier système de commande désengage le rapport N
   - le premier système de commande sélectionne la ligne des embrayages, et
   - le second système de commande ferme le premier embrayage.

D'autres caractéristiques et avantages de la présente invention apparaîtront clairement à la lecture de la description détaillée qui suit pour laquelle on se reportera aux dessins annexés dans lesquels :
- la figure 1 représente schématiquement une boîte de vitesses 10 à double embrayage d'entrée dans laquelle le dispositif de commande de l'invention trouve une application non limitative,
- la figure 2 représente l'ensemble du dispositif proposé,
- la figure 3 représente une partie du dispositif concernant les rapports de rang impair, le doigt de commande étant situé sur la ligne de sélection des crabots de commande d'embrayage,
- la figure 4 représente une partie du dispositif de commande concernant les rapports de rang impair, le doigt de commande étant situé sur la ligne de sélection neutre supérieure,
- la figure 5 représente une partie du dispositif de commande concernant les rapports de rang impair, le doigt de commande étant situé sur la ligne de sélection des rapports de marche arrière et de troisième,
- la figure 6 représente une partie du dispositif de commande concernant les rapports de rang impair, le doigt de commande étant situé sur la ligne de sélection neutre inférieure,
- la figure 7 représente une partie du dispositif de commande concernant les rapports de rang impair, le doigt de commande étant situé sur la ligne de sélection des rapports de première et de cinquième,
- la figure 8 représente une partie du dispositif de commande concernant les rapports de rang pair, le doigt de commande étant situé sur la ligne de sélection des crabots de commande d'embrayage,
- la figure 9 représente une partie du dispositif de commande concernant les rapports de rang pair, le doigt de commande étant situé sur la ligne de sélection neutre supérieure,
- la figure 10 représente une partie du dispositif de commande concernant les rapports de rang pair, le doigt de commande étant situé sur la ligne de sélection des rapports de deuxième et de quatrième,
- la figure 11 représente une partie du dispositif de commande concernant les rapports de rang pair, le doigt de commande étant situé sur la ligne de sélection neutre inférieure, et
- la figure 12 représente une partie du dispositif de commande concernant les rapports de rang pair, le doigt de commande étant situé sur la ligne de sélection du rapport de sixième.

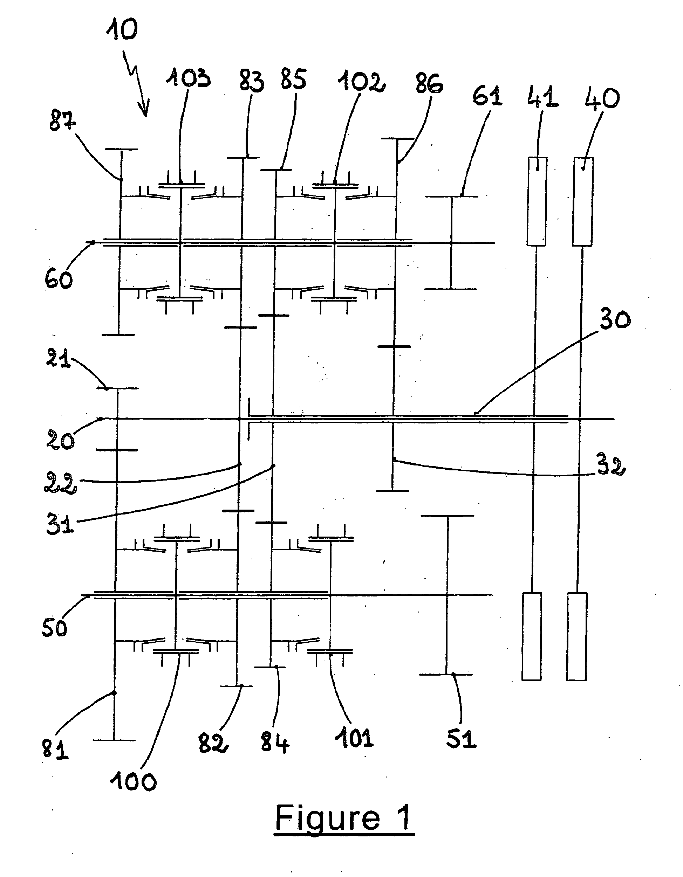

On a représenté sur la figure 1 une structure schématique d'une boîte de vitesses 10 à double embrayage d'entrée de type connu, pouvant être commandée conformément à l'invention.

De manière conventionnelle, la boîte de vitesses 10 comporte un premier arbre primaire plein 20 qui est monté coaxialement à un second arbre primaire creux 30. Ces deux arbres sont montés à rotation dans un carter (non représenté) et entraînés par un moteur respectivement par l'intermédiaire d'un premier embrayage 40 et d'un second embrayage 41, qui sont par exemple, mais pas obligatoirement des embrayages monodisque secs.

La boîte de vitesses 10 comporte aussi un premier arbre secondaire 50 et un deuxième arbre secondaire 60, également montés à rotation dans le carter. Ces arbres secondaires sont agencés, aux extrémités des branches d'un « V » compris dans le plan transversal aux axes des arbres 20, 30, 50 et 60, et dont le sommet est confondu avec l'axe des arbres primaires 20 et 30.

Des engrenages sont agencés entre les arbres primaires 20 et 30 et les arbres secondaires 50 et 60, de manière à transmettre le couple du véhicule à une couronne d'un différentiel d'un pont (non représentés) entraînant les roues d'un véhicule. A cet effet, le premier arbre secondaire 50 et le second arbre secondaire 60 comportent respectivement un premier pignon d'attaque 51 et un second pignon d'attaque 61 qui engrènent tous les deux avec la couronne du différentiel.

Les engrenages sont constitués de pignons fixes qui sont portés par les premier second arbres primaires 20 et 30, et qui engrènent avec des pignons fous qui sont portés par les premier et second arbres secondaires 50 et 60. Les pignons fous peuvent sélectivement être liés en rotation au premier et au second arbre secondaires 50 et 60 par des moyens de crabotage indépendants pour réaliser des engrenages indépendants correspondant sélectivement à au moins deux rapports de marche avant et à un rapport de marche arrière. Les deux embrayages 40 du premier arbre primaire 20, et 41 du deuxième arbre primaire 30 peuvent par ailleurs être actionnés alternativement, en passant par un état où ils transmettent tous les deux le couple par glissement de l'un d'eux, pour permettre au moins un changement de rapport sans discontinuité de couple transmis aux roues.

Le premier arbre primaire 20 porte deux pignons fixes, de gauche à droite, 21 et 22, le premier d'entre eux engrène avec un unique pignon fou 81, porté par le premier arbre secondaire 50, pour constituer le rapport de première, le second d'entre eux engrène avec deux pignons fous 82 et 83, respectivement portés par le premier arbre secondaire 50 pour constituer le rapport de cinquième et par le second arbre secondaire 60 pour constituer le rapport de troisième. Le second arbre primaire creux 30 porte également deux pignons fixes, de gauche à droite, 31 et 32. Le premier d'entre eux engrène avec deux pignons fous 84 et 85, respectivement portés par le premier arbre secondaire 50 pour constituer le rapport de sixième, et par le second arbre secondaire 60 pour constituer le rapport de quatrième, le second d'entre eux engrène un pignon fou 86 porté le second arbre secondaire 60 pour constituer le rapport de deuxième. Le rapport de marche arrière a son propre pignon fou 87, porté par le second arbre secondaire 60, qui engrène avec le pignon fou de première 81 qui fait office de pignon intermédiaire de marche arrière.

L'ensemble des six rapports avant et le rapport de marche arrière sont ainsi obtenus avec deux pignons fixes 21 et 22 sur le premier arbre primaire plein 20 pour obtenir les rapports impairs et avec deux pignons fixes 31 et 32 sur le second arbre primaire creux 30 pour obtenir les rapports pairs.

En outre, tous les pignons fous peuvent être sélectivement liés aux arbres secondaires qui les portent par des dispositifs de crabotage simple ou double. Les pignons fous 81, 82, 84 peuvent ainsi être liés sélectivement à l'arbre secondaire 50 qui les porte, et les pignons fous 83, 85, 86 et 87 peuvent être sélectivement liés à l'arbre secondaire 60 qui les porte.

Un premier dispositif de crabotage double 100 permet de lier sélectivement en rotation à l'arbre secondaire 50 le pignon fou 81 pour obtenir le rapport de première ou le pignon fou 82 pour obtenir le rapport de cinquième. Un second dispositif de crabotage simple 101 permet de lier en rotation à l'arbre secondaire 50 le pignon fou 84 pour obtenir le rapport de sixième, Un troisième dispositif de crabotage double 102 permet de lier sélectivement en rotation à l'arbre secondaire 60 le pignon fou 85 pour obtenir le rapport de quatrième ou le pignon fou 86 pour obtenir le rapport de deuxième. Enfin, un dispositif de crabotage double 103 permet de lier sélectivement en rotation à l'arbre secondaire 60 le pignon fou 83 pour obtenir le rapport de troisième, ou le pignon fou 87 pour obtenir le rapport de marche arrière.

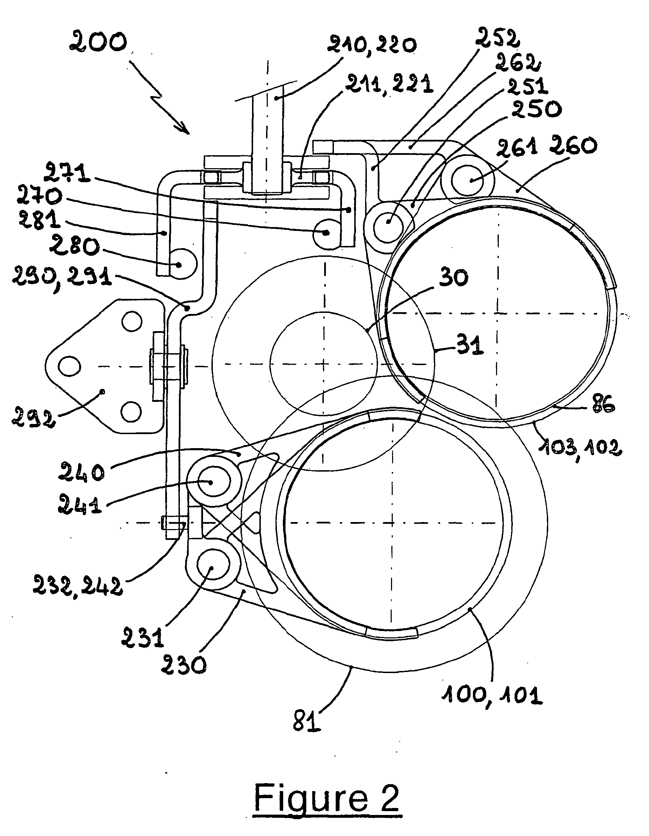

La figure 2 représente la structure d'ensemble du dispositif de commande 200 réalisé conformément à l'invention.

Ce dispositif comporte deux systèmes de commande situés dans deux plans perpendiculaires aux axes des arbres secondaires 50, 60, et sensiblement positionnés dans les plans de symétrie d'une part des groupes de crabotage 100, 103 et d'autre part des groupes de crabotage 101, 102. Le premier système Cᵢₘₚₐᵢᵣ commande les baladeurs 100 et 103 des rapports de rang impair; le second système Cₚₐᵢᵣ commande les baladeurs 101, 102 des rapports de rang pair.

Les actionneurs, de type hydraulique ou électromécanique (non représentés) entrent dans la boîte par les axes 210, 220 qui supportent les doigts de passage doubles 211, 221. Ces axes se déplacent en translation pour réaliser des sélections de ligne, et en rotation pour actionner les dispositifs de crabotage ou manoeuvrer les embrayages.

Le dispositif proposé comprend une première fourchette 230 de commande du groupe de crabotage 100 des rapports de première et de cinquième, portée par un axe 231 coulissant par rapport à ses paliers dans le carter (non représenté), possédant un pion d'entraînement 232, une deuxième fourchette 240 de commande du groupe de crabotage 101 du rapport de sixième, portée par un axe 241, possédant un pion d'entraînement 242, une troisième fourchette 250 de commande du groupe de crabotage 103 des rapports de marche arrière et de troisième, portée par un axe 251, possédant un crabot d'entraînement 252, et une quatrième fourchette 260 de commande du groupe de crabotage 102 des rapports de quatrième et de deuxième, portée par un axe 261, possédant un crabot d'entraînement 262.

Un cinquième axe 270 portant un crabot 271, manoeuvre l'embrayage 40 des rapports de rang impair ou premier embrayage E1, et un sixième axe 280 portant un crabot 281, manoeuvre l'embrayage 41 des rapports de rang pair, ou deuxième embrayage E2.

Le positionnement des axes de fourchette de commande des embrayages et le passage des branches des fourchettes sont déterminés par les pignons ou les éléments tournants les plus encombrants sur chacun des arbres. Les axes 231,241 sont placés en fonction de l'encombrement du pignon de première 81 sur l'arbre secondaire 50 et du pignon fixe 31 de troisième et de cinquième sur l'arbre primaire creux 30. Les axes 251, 261 sont disposés en fonction de l'encombrement des baladeurs 102, 103, de dimension supérieure à celui du pignon 86 de deuxième sur l'arbre secondaire 60 et en fonction de l'encombrement du pignon fixe 31 de troisième et de cinquième sur l'arbre primaire creux 30. Enfin, les branches sont agencées en fonction de l'encombrement de l'arbre creux 30.

Les fourchettes 230 et 231 situées en partie basse de la boîte, sont commandées par les doigts 211,221 situés en partie haute par l'intermédiaire des basculeurs 290, 291 portés par un support unique 292 fixé dans le carter (non représenté).

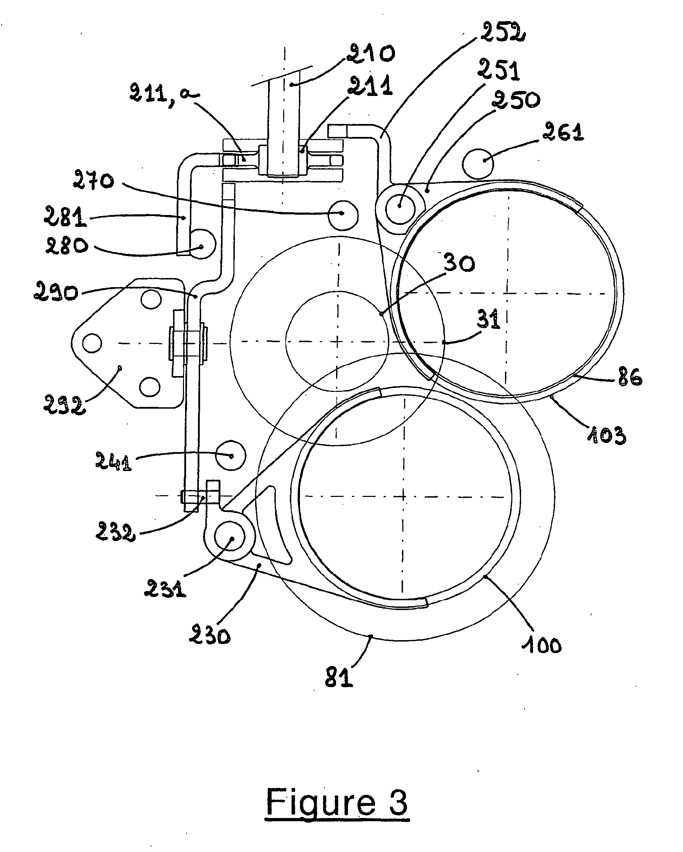

Les figures 3 à 7 représentent le système de commande des rapports impairs Cᵢₘₚₐᵢᵣ (premier système de commande), dans les différentes situations de fonctionnement. La figure 3 représente Cᵢₘₚₐᵢᵣ en position repos, le doigt double 211 étant alors situé à la même hauteur ou face au crabot 281 de commande du second embrayage 41 (E2) associé aux rapports pairs ; la rotation de la branche 211a, déplace le crabot 281 selon l'axe 280 et assure la manoeuvre de l'embrayage 41.

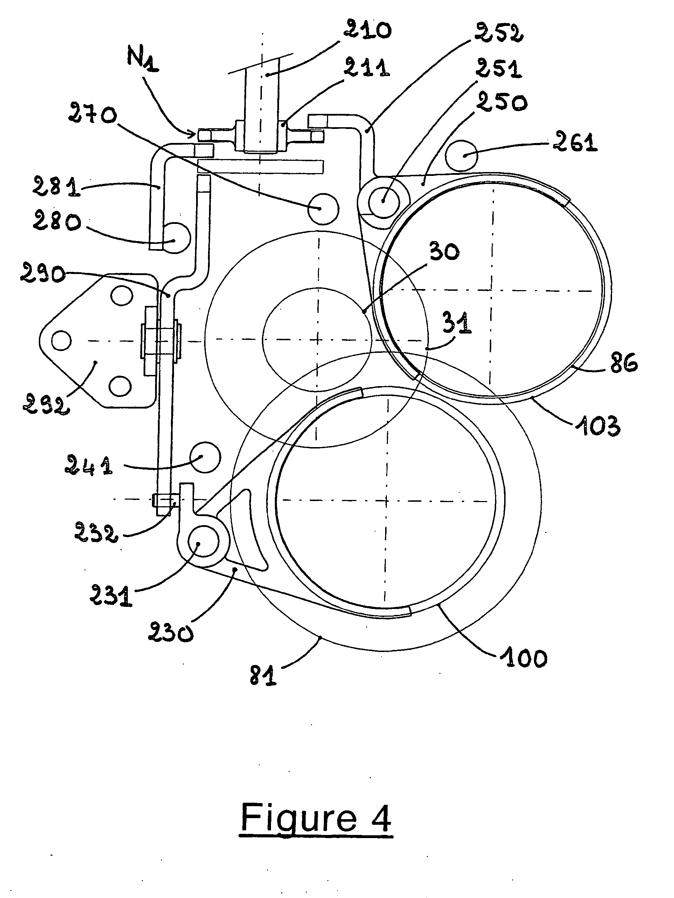

La figure 4 représente Cᵢₘₚₐᵢᵣ en position neutre, le doigt double 211 est alors situé dans la zone neutre supérieure N1 qui le rend inactif, et son déplacement en rotation permet de réaliser la séquence requise pour changer de rapport comme indiqué ci-dessous.

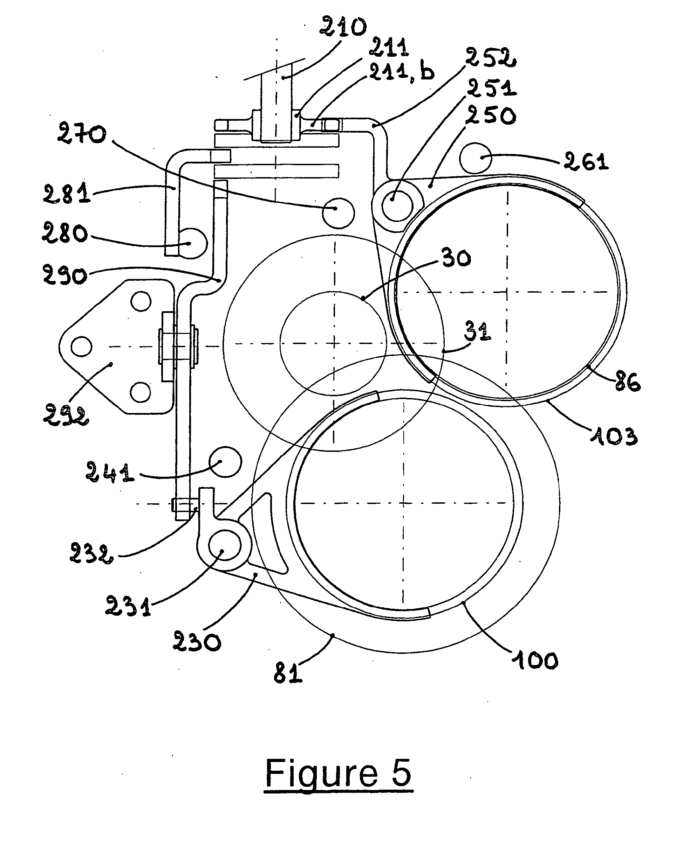

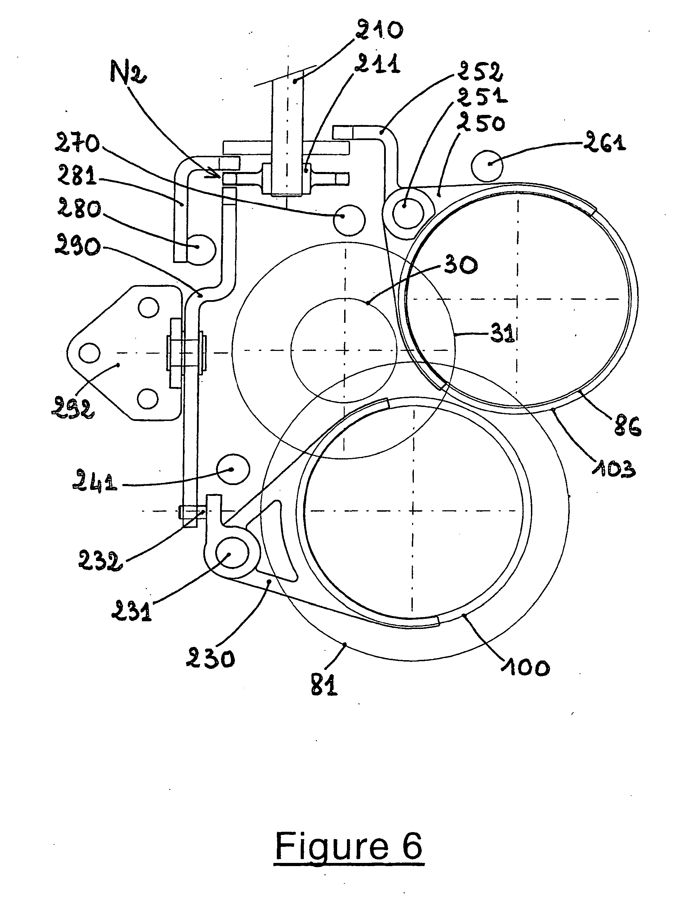

La figure 5 représente également Cᵢₘₚₐᵢᵣ en position d'engagement des rapports de marche arrière ou de troisième selon que la branche 211b du doigt double 211 tourne dans le sens des aiguilles d'une montre ou en sens inverse. Le doigt double 211 est alors situé à la même hauteur ou face au crabot 252 de la fourchette 250 de commande du baladeur 103. La figure 6 représente Cᵢₘₚₐᵢᵣ en position neutre, le doigt double 211 étant alors situé dans la zone neutre inférieure N2 qui le rend inactif et autorise son déplacement en rotation pour assurer la séquence requise.

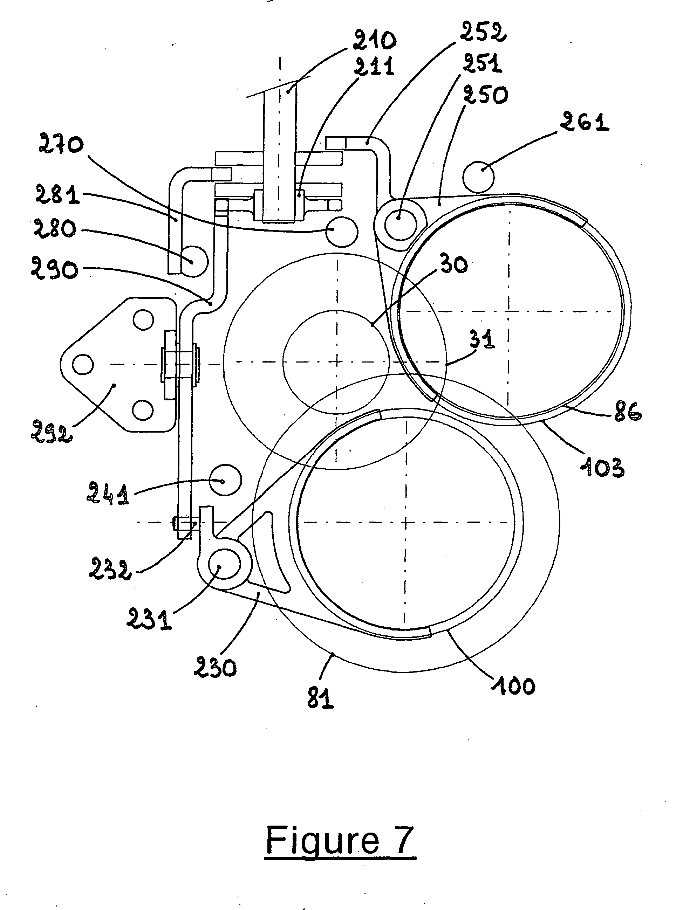

Enfin, la figure 7 représente également *C*ᵢₘₚₐᵢᵣ en position d'engagement des rapports de première et de cinquième, selon que la branche 211a du doigt double 211 tourne dans le sens des aiguilles d'une montre ou en sens inverse. Le doigt double 211 est alors situé à la hauteur du crabot de l'inverseur 290, qui par l'intermédiaire du pion d'entraînement 232, entraîne selon son axe la fourchette 230 de commande du baladeur 100.

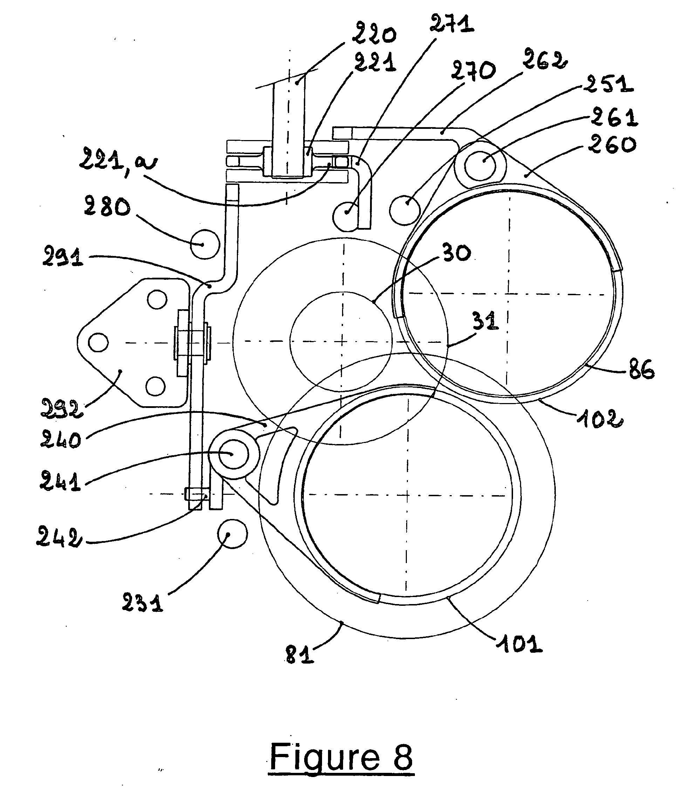

Les figures 8 à 12 représentent le système de commande des rapports impairs Cₚₐᵢᵣ (second système de commande) dans différentes situations de fonctionnement. La figure 8 montre Cₚₐᵢᵣ en position repos, le doigt double 221 étant alors situé à la même hauteur ou face au crabot 271 de commande de l'embrayage E1 associé aux rapports impairs ; la branche 221a déplace en tournant le crabot 271 selon l'axe 270 et assure la manoeuvre de l'embrayage 40.

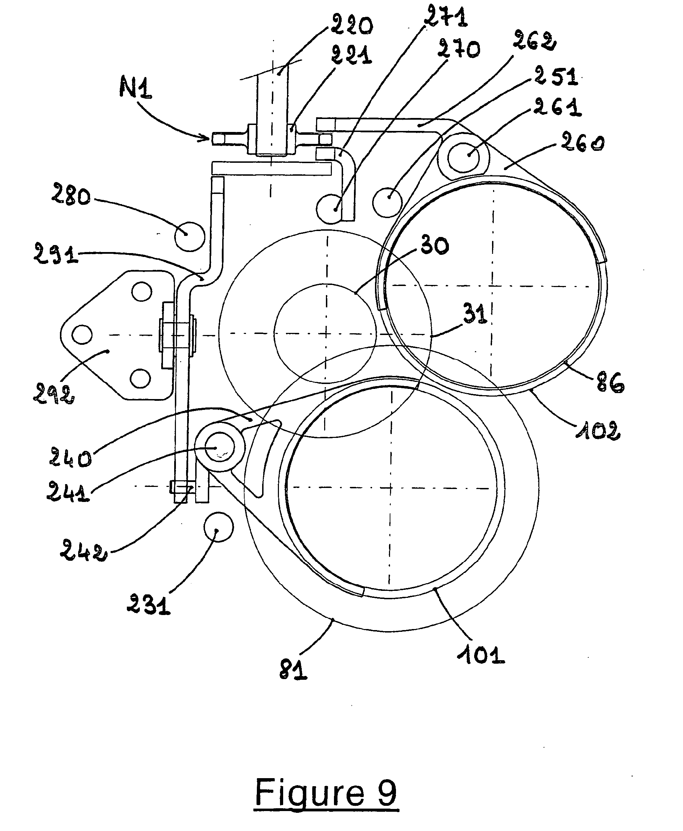

La figure 9 représente Cₚₐᵢᵣ en position neutre, le doigt double 221 est alors situé dans la zone neutre supérieure N1 qui le rend inactif et lui permet de tourner et de s'orienter de façon à assurer la séquence de changement de rapport souhaitée.

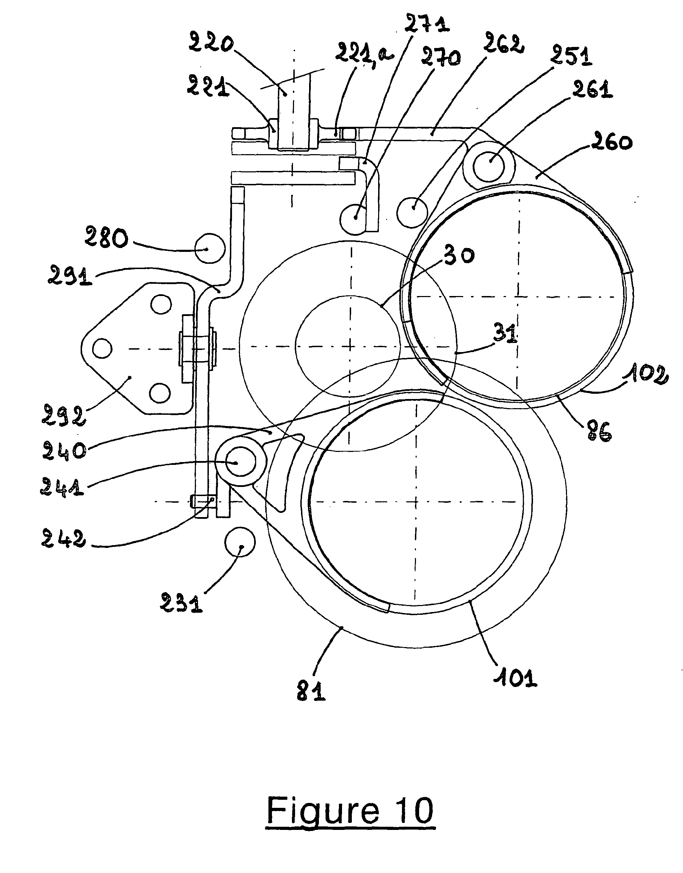

La figure 10 représente également Cₚₐᵢᵣ en position d'engagement des rapports de quatrième ou de deuxième selon que la branche 221a du doigt double 221 est dans le sens des aiguilles d'une montre ou en sens inverse. Le doigt double 221 est alors situé à la même hauteur ou face au crabot 262 de la fourchette 260 de commande du baladeur 102.

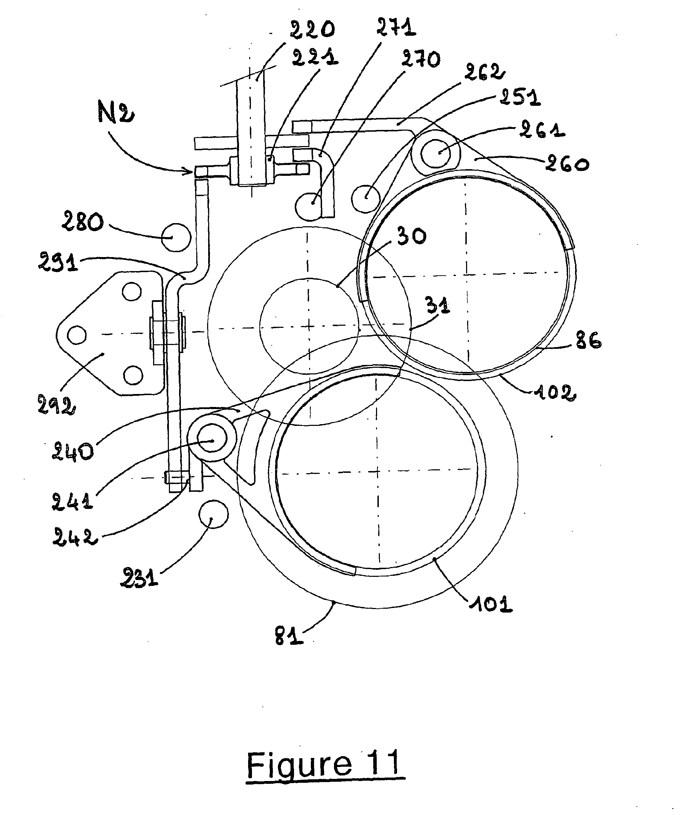

La figure 11 représente Cₚₐᵢᵣ en position neutre, le doigt double 221 étant alors situé dans la zone neutre inférieure N2 qui le rend inactif et pouvant tourner et s'orienter de façon à effectuer la séquence requise pour le changement de rapport.

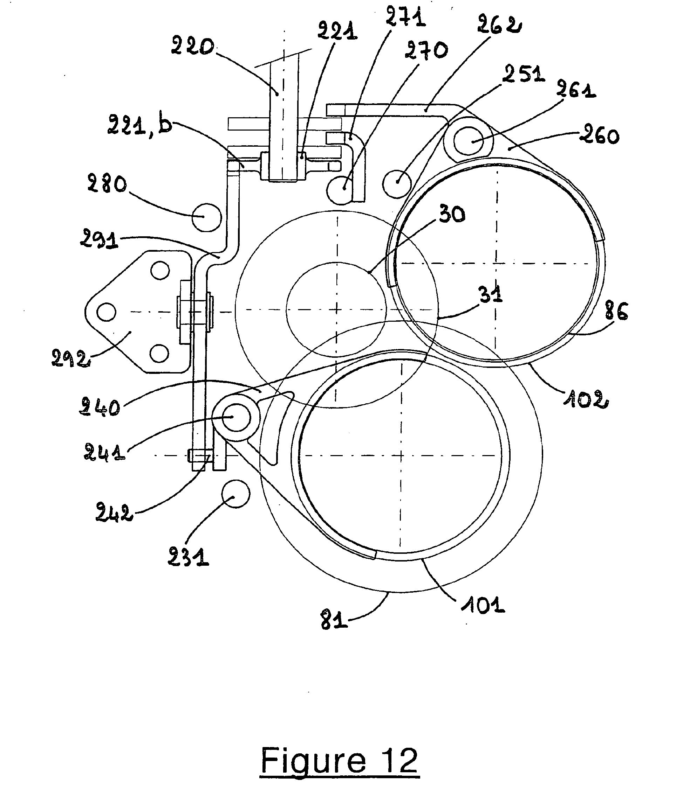

Enfin, la figure 12 représente également Cₚₐᵢᵣ en position d'engagement du rapport de sixième par rotation de la branche 221b du doigt double 221. Le doigt double 211 est alors situé à la hauteur du crabot de l'inverseur 291 qui par l'intermédiaire du pion d'entraînement 242 entraîne, selon son axe, la fourchette 240 de commande du baladeur 101.

Les deux actionneurs commandés simultanément par une unité centrale de gestion des changements de rapport sont en mesure d'actionner les fourchettes et les embrayages de manière à réaliser les passages montants sans interruption du couple monteur et les passages descendants, avec ou sans interruption de couple.

Conformément à l'invention, une séquence type de passage d'un rapport donné au rapport immédiatement supérieur est une suite de mouvements de rotation et de translation faisant intervenir les deux actionneurs de sorte qu'au début de toute séquence, les doigts des deux actionneurs 211, 221 sont au repos sur la ligne de sélection des deux crabots de commande d'embrayages 271, 281, au repos, et les deux embrayages 40, 41 sont fermés. En fin de séquence, les doigts des deux actionneurs 211,221 sont à nouveau au repos sur la ligne de sélection des deux crabots de commande d'embrayage 271, 281, et les deux embrayages 40, 41 sont fermés.

A titre d'exemple non limitatif, les séquences de passage de première en deuxième, de sixième en cinquième sans rupture de couple et avec rupture de couple, le passage de sixième en quatrième avec rupture de couple, et le passage de point mort en première conformément à l'invention, peuvent s'effectuer de la façon suivante.

### Passage du rapport de première au rapport de deuxième

Au début de la séquence, les deux commandes Cₚₐᵢᵣ (220) et Cᵢₘₚₐᵢᵣ (210) sont au repos sur la ligne de sélection E₁-E₂, les deux embrayages sont fermés.
Pendant que le moteur entraîne le véhicule sur le rapport de première :
- Cᵢₘₚₐᵢᵣ ouvre l'embrayage E₂ (41),
- Cₚₐᵢᵣ sélectionne la ligne 4-2 et engage la deuxième,
- Cₚₐᵢᵣ sélectionne la ligne neutre N₁, oriente le doigt, et sélectionne la ligne E₁-E₂.

L'unité centrale de commande des actionneurs change alors le rapport :
- simultanément Cₚₐᵢᵣ ouvre E₁ (40) et Cᵢₘₚₐᵢᵣ ferme E₂.

L'unité centrale de commande des actionneurs désengage ensuite le rapport de première :
- Cᵢₘₚₐᵢᵣ sélectionne la ligne neutre N2, oriente le doigt et sélectionne la ligne 1-5,
- Cᵢₘₚₐᵢᵣ désengage le rapport de première,
- Cᵢₘₚₐᵢᵣ sélectionne la ligne E₁-E₂, et
- Cₚₐᵢᵣ ferme E₁.
En fin de séquence, les deux commandes Cₚₐᵢᵣ et Cᵢₘₚₐᵢᵣ sont au repos sur la ligne de sélection E₁-E₂, les deux embrayages sont fermés.

De façon analogue, les autres passages montants, de deuxième à troisième, de troisième à quatrième, de quatrième à cinquième, de cinquième à sixième ainsi que les sauts de rapports, par exemple, de deuxième à cinquième, de troisième à sixième, sont également réalisables avec continuité de la transmission du couple moteur.

### Passage du rapport de sixième au rapport de cinquième sous couple.

Cette situation intervient quand le conducteur fait usage du frein. En début de séquence, les deux commandes Cₚₐᵢᵣ et Cᵢₘₚₐᵢᵣ sont au repos sur la ligne de sélection E₁-E₂, les deux embrayages sont fermés.

Pendant que le véhicule entraîne le moteur sur le rapport de sixième:
- Cₚₐᵢᵣ ouvre l'embrayage E₁,
- Cᵢₘₚₐᵢᵣ sélectionne la ligne 1-5 et engage la cinquième,
- Cimpair sélectionne la ligne neutre N2, oriente le doigt et sélectionne la ligne E₁-E₂.

L'unité centrale de commande des actionneurs change le rapport :
- simultanément Cₚₐᵢᵣ ferme E₁ et Cᵢₘₚₐᵢᵣ ouvre E₂.

L'unité centrale de commande des actionneurs désengage le rapport de sixième :
- Cₚₐᵢᵣ sélectionne la ligne neutre N2, oriente le doigt, sélectionne la ligne 6,
- Cₚₐᵢᵣ désengage le rapport de sixième,
- Cₚₐᵢᵣ sélectionne la ligne E₁-E₂,
- Cᵢₘₚₐᵢᵣ ferme E₂.

En fin de séquence, les deux commandes Cₚₐᵢᵣ et Cᵢₘₚₐᵢᵣ sont au repos sur la ligne de sélection E₁-E₂, et les deux embrayages sont fermés.

De façon analogue, les autres passages descendants, de cinquième en quatrième, de quatrième en troisième, de troisième en deuxième, de deuxième en première, ainsi que les sauts de rapports, par exemple de sixième en troisième ou de cinquième en deuxième, sont également réalisables avec continuité de la transmission du couple moteur.

### Passage du rapport de sixième au rapport de cinquième avec rupture couple.

Cette situation intervient quand le conducteur ne fait pas usage du frein et demande une relance du véhicule en enfonçant davantage la pédale d'accélérateur. En début de séquence, les deux commandes Cₚₐᵢᵣ et Cᵢₘₚₐᵢᵣ sont au repos sur la ligne de sélection E₁-E₂, et les deux embrayages sont fermés.

Pendant que le moteur entraîne le véhicule sur le rapport de sixième :
- Cₚₐᵢᵣ ouvre l'embrayage E₁,
- Cᵢₘₚₐᵢᵣ sélectionne la ligne 1-5 et engage la cinquième,
- Cᵢₘₚₐᵢᵣ sélectionne la ligne neutre N2, oriente le doigt, et sélectionne la ligne E₁-E₂.

L'unité centrale de commande des actionneurs alors change le rapport :
- Cᵢₘₚₐᵢᵣ ouvre partiellement E₂, laisse la relance moteur s'effectuer, et
- simultanément Cₚₐᵢᵣ ferme E₁ et Cᵢₘₚₐᵢᵣ achève l'ouverture de E₂ quand la relance moteur est effectuée.

L'unité centrale de commande des actionneurs désengage ensuite le rapport de sixième :
- Cₚₐᵢᵣ sélectionne la ligne neutre N2, oriente le doigt, sélectionne la ligne 6,
- Cₚₐᵢᵣ désengage le rapport de sixième,
- Cₚₐᵢᵣ sélectionne la ligne E₁-E₂, et
- Cᵢₘₚₐᵢᵣ ferme E₂.

En fin de séquence, les deux commandes Cₚₐᵢᵣ et Cᵢₘₚₐᵢᵣ sont au repos sur la ligne de sélection E₁-E₂, les deux embrayages sont fermés.

De façon analogue, les autres passages descendants, de cinquième à quatrième, de quatrième à troisième, de troisième à deuxième, de deuxième à première, ainsi que les sauts de rapports, par exemple, de sixième à troisième, de cinquième à deuxième, sont également réalisables de cette manière.

### Passage du. rapport de sixième au rapport de quatrième avec rupture couple.

Cette situation intervient quand le conducteur ne fait pas usage du frein et demande une relance du véhicule en enfonçant davantage la pédale d'accélérateur. En début de séquence, les deux commandes Cₚₐᵢᵣ et Cᵢₘₚₐᵢᵣ sont au repos sur la ligne de sélection E₁-E₂, les deux embrayages sont fermés.

Dès le début de la séquence, le contrôle moteur empêche l'envolée de celui (fermeture du papillon d'admission, modification de l'avance à l'allumage, coupure partielle de l'injection...) en raison de l'ouverture de la chaîne cinématique.
- Cᵢₘₚₐᵢᵣ ouvre l'embrayage E₂ ;
- Cₚₐᵢᵣ sélectionne la ligne 6 et désengage la sixième,
- Cₚₐᵢᵣ sélectionne la ligne 2-4 et engage la quatrième,
- Cᵢₘₚₐᵢᵣ ferme E₂, et
- Cₚₐᵢᵣ sélectionne la ligne neutre N1, oriente le doigt et sélectionne la ligne E₁-E₂.

En fin de séquence, les deux commandes Cₚₐᵢᵣ et Cᵢₘₚₐᵢᵣ sont au repos sur la ligne de sélection E₁-E₂, les deux embrayages sont fermés.

Les autres sauts en passages descendants, de cinquième à troisième, de quatrième à deuxième, de troisième à première, sont également réalisables de cette manière.

### Passage du point mort vers le rapport de première :

En début de séquence, les deux commandes Cₚₐᵢᵣ et Cᵢₘₚₐᵢᵣ sont au repos sur la ligne de sélection E₁-E₂, les deux embrayages sont fermés.
- Cₚₐᵢᵣ ouvre E₁,
- Cᵢₘₚₐᵢᵣ sélectionne la ligne 1-5 et engage la première,
- Cₚₐᵢᵣ ferme E₁,
- Cᵢₘₚₐᵢᵣ sélectionne la ligne N2, oriente le doigt et sélectionne la ligne E₁-E₂.

En fin de séquence, les deux commandes Cₚₐᵢᵣ et Cᵢₘₚₐᵢᵣ sont au repos sur la ligne de sélection E₁-E₂, les deux embrayages sont fermés.

Une séquence type de passage d'un rapport donné au rapport immédiatement supérieur est donc une suite de mouvements de rotation et de translation faisant intervenir les deux actionneurs de sorte qu'au début de toute séquence, les doigts des deux actionneurs 211, 221 sont sur la ligne de sélection des deux crabots de commande d'embrayages 271, 281, au repos, et les deux embrayages 40, 41 sont fermés et qu'en fin de séquence, à nouveau, les doigts des deux actionneurs 211, 221 sont sur la ligne de sélection des deux crabots de commande d'embrayage 271, 281, au repos, et les deux embrayages 40, 41 sont fermés.

En résumé, l'invention permet de réaliser une séquence type de passage d'un rapport N de rang impair au rapport N + 1 immédiatement supérieur de rang pair, de la façon suivante :
a) pendant que le moteur entraîne le véhicule sur le rapport de N,
   - le premier système de commande (210) ouvre l'embrayage (41) (dédié aux rapports pairs),
   - le second système de commande (220) sélectionne la ligne des rapports X-N+1 et engage le rapport N+1 pair,
   - le second système de commande (220) sélectionne la ligne neutre intermédiaire (N1 ou N2), oriente le doigt et sélectionne la ligne E₁-E₂ (des crabots 271,281).
b) l'unité centrale de commande des actionneurs change le rapport :
   - le second système de commande (220) ouvre le premier embrayage (40) et
      simultanément le premier système de commande (210) ferme le second embrayage(41).
c) l'unité centrale de commande des actionneurs désengage le rapport N :
   - le premier système de commande sélectionne la ligne neutre intermédiaire (N1 ou N2), oriente le doigt de commande, et sélectionne la ligne Y-N,
   - le premier système de commande (210) désengage le rapport N,
   - le premier système de commande sélectionne la ligne des embrayages, et
   - le second système de commande ferme le premier embrayage.

## Revendications

1. Dispositif de commande interne de boîte de vitesses mécanique munie d'un premier et d'un second embrayage d'entrée (40, 41) contrôlant respectivement la transmission du couple moteur vers un premier et un second arbre primaire concentriques (20, 30) portant des pignons fixes (21, 22, 31, 32), de deux arbres secondaires (50, 60) portant des pignons fous entraînés respectivement par le premier et par le second arbre primaire et de moyens de crabotage (100, 101, 102 103) des pignons fous actionnés par un ensemble de fourchettes (230, 240, 250, 260), **caractérisé en ce qu'**il comporte deux systèmes de commande indépendants, dont le premier assure l'actionnement du second embrayage (41) et la commutation des rapports dépendants du premier arbre primaire (20), et dont le second assure l'actionnement du premier embrayage (40) et la commutation des rapports dépendants du second arbre primaire (30).

2. Dispositif de commande selon la revendication 1, **caractérisé en ce qu**'il comporte deux axes (270, 280) munis de crabots (271, 281) de manoeuvre des embrayages (40, 41) actionnées par les mêmes doigts de commande (211 221) que les fourchettes (230, 240, 250, 260).

3. Dispositif de commande selon la revendication 1 ou 2, **caractérisé en ce que** les fourchettes sont actionnées directement par des doigts de commande (211, 221) ou par l'intermédiaire de basculeurs (290, 291).

4. Dispositif de commande selon les revendications 1, 2 ou 3, **caractérisé en ce que** le premier système de commande assure la commutation des rapports de rang impair et **en ce que** le second système de commande assure la commutation des rapports de rang pair.

5. Dispositif de commande selon l'une des revendications précédentes, **caractérisé en ce que** les doigts de commande (211, 221) sont déplacés en translation pour s'engager dans des crabots de passage des rapports (252, 262), de basculeurs de passage (290, 291) ou de commande d'embrayage (271, 281, 221), et en rotation pour l'engager les rapports ou manoeuvrer les embrayages.

6. Dispositif de commande selon la revendication 5, **caractérisé en ce que** les crabots de commande d'embrayage (271, 281) sont disposés entre deux crabots de passage des rapports (252, 262) et les basculeurs (290, 291).

7. Dispositif de commande de boîte de vitesses à deux embrayages selon la revendications 1 ou 5, **caractérisé en ce qu**'il présente un premier intervalle de sélection neutre (N1) entre les crabots de passage des rapports (252, 262) et les crabots de commande d'embrayage (271, 281) et un second intervalle de sélection neutre (N2) entre les basculeurs de passage des rapports (290, 291) et les crabots de commande d'embrayage (271,281).

8. Procédé de commande de boîte de vitesses au moyen d'un dispositif conforme à l'une des revendications précédentes, **caractérisé en ce qu**'une séquence type de passage d'un rapport donné au rapport immédiatement supérieur est une suite de mouvements de rotation et de translation faisant intervenir les deux actionneurs de sorte qu'au début de toute séquence, les doigts des deux actionneurs (211,221) sont sur la ligne de sélection des deux crabots de commande d'embrayages (271, 281), au repos, et les deux embrayages (40, 41) sont fermés et en ce qu'en fin de séquence, à nouveau, les doigts des deux actionneurs (211,221) sont sur la ligne de sélection des deux crabots de commande d'embrayage (271, 281), au repos, et les deux embrayages (40, 41) sont fermés.

9. Procédé de commande selon la revendication 8, **caractérisé en ce qu**'une séquence type de passage d'un rapport N de rang impair au rapport N + 1 immédiatement supérieur de rang pair, est la suivante :
a) pendant que le moteur entraîne le véhicule sur le rapport de N
• le premier système de commande (210) ouvre l'embrayage (41) dédié aux rapports de rang pair,
• le second système de commande (220) sélectionne la ligne des rapports X-N+1 et engage le rapport N+1,
• le second système de commande (220) sélectionne la ligne neutre intermédiaire (N1 ou N2), oriente le doigt et sélectionne la ligne E₁-E₂ des crabots 271,281.
b) l'unité centrale de commande des actionneurs change le rapport :
• le second système de commande (220) ouvre le premier embrayage (40), et
• simultanément le premier système (210) de commande ferme le second embrayage (41).
c) l'unité centrale de commande des actionneurs désengage le rapport N :
• le premier système de commande sélectionne la ligne neutre intermédiaire (N1 ou N2), oriente le doigt de commande, et sélectionne la ligne Y-N,
• le premier système de commande (210) désengage le rapport N
• le premier système de commande sélectionne la ligne des embrayages, et
• le second système de commande ferme le premier embrayage (40).

## Claims

1. Control device for internal control of a mechanical transmission equipped with a first and a second input clutch (40, 41) controlling respectively the transmission of the drive torque towards a first and a second primary shaft (20, 30) which are concentric and carry stationary gears (21, 22, 31, 32), with two secondary shafts (50, 60) carrying idle gears driven respectively by the first and the second primary shaft, and with means (100, 101, 102, 103) for the claw-coupling of the idle gears, the said claw-coupling means being actuated by a set of forks (230, 240, 250, 260), **characterized in that** the said device comprises two independent control systems, the first of which ensures the actuation of the second clutch (41) and the switching of the ratios dependent on the first primary shaft (20) and the second of which ensures the activation of the first clutch (40) and the switching of the ratios dependent on the second primary shaft (30).

2. Control device according to Claim 1, **characterized in that** it comprises two axles (270, 280) equipped with claws (271, 281) for operating the clutches (40, 41), the said claws being actuated by the same control fingers (211, 221) as the forks (230, 240, 250, 260).

3. Control device according to Claim 1 or 2, **characterized in that** the forks are actuated directly by control fingers (211, 221) or by means of rockers (290, 291).

4. Control device according to Claims 1, 2 or 3, **characterized in that** the first control system ensures the switching of the odd-numbered ratios, and **in that** the second control system ensures the switching of the even-numbered ratios.

5. Control device according to one of the preceding claims, **characterized in that** the control fingers (211, 221) are displaced in translational movement, in order to engage into ratio shift claws (252, 262), shift rocker claws (290, 291) or clutch control claws (271, 281, 221), and in rotational movement, in order to engage the ratios or operate the clutches.

6. Control device according to Claim 5, **characterized in that** the clutch control claws (271, 281) are arranged between two ratio shift claws (252, 262) and the rockers (290, 291).

7. Device for the control of a double-clutch transmission casing according to Claim 1 or 5, **characterized in that** it has a first neutral selection interval (N1) between the ratio shift claws (252, 262) and the clutch control claws (271, 281) and a second neutral selection interval (N2) between the ratio shift rockers (290, 291) and the clutch control claws (271, 281).

8. Method for the control of transmission casing by means of a device according to one of the preceding claims, **characterized in that** a typical sequence for the shift of a given ratio to the ratio immediately above is a series of rotational and translational movements involving the two actuators, in such a way that, at the commencement of any sequence, the fingers of the two actuators (211, 221) are on the selection line of the two clutch control claws (271, 281), at rest, and the two clutches (40, 41) are closed, and **in that**, at the end of the sequence, once again, the fingers of the two actuators (211, 221) are on the selection line of the two clutch control claws (271, 281), at rest, and the two clutches (40, 41) are closed.

9. Control method according to Claim 8, **characterized in that** a typical sequence for the shift from an odd-numbered ratio N to the even-numbered ratio N + 1 immediately above is as follows:
a) while the engine is driving the vehicle at the ratio N,
• the first control system (210) opens the clutch (41) assigned to the even-numbered ratios,
• the second control system (220) selects the line of the ratios X-N+1 and engages the ratio N+1,
• the second control system (220) selects the intermediate neutral line (N1 or N2), orients the finger and selects the line E₁-E₂ of the claws 271,281,
b) the central control unit of the actuators changes the ratio,
• the second control system (220) opens the first clutch (40) and,
• simultaneously, the first control system (210) closes the second clutch (41),
c) the central control unit of the actuators disengages the ratio N,
• the first control system selects the intermediate neutral line (N1 or N2), orients the control finger and selects the line Y-N,
• the first control system (210) disengages the ratio N,
• the first control system selects the line of the clutches, and
• the second control system closes the first clutch (40).

## Patentansprüche

1. Interne Steuervorrichtung für ein mechanisches Getriebe, umfassend eine erste und eine zweite Eingangskupplung (40, 41), die die Übertragung des Antriebsmoments zu einer ersten und einer zweiten konzentrischen Primärwelle (20, 30), die feste Ritzel (21, 22, 31, 32) tragen, kontrolliert, zwei Sekundärwellen (50, 60), die bewegliche Ritzel tragen, die von der ersten bzw. der zweiten Primärwelle angetrieben werden, und Klauenkupplungsmittel (100, 101, 102, 103) der beweglichen Ritzel, die von einer Gabeleinheit (230, 240, 250, 260) betätigt werden, **dadurch gekennzeichnet, dass** sie zwei unabhängige Steuersysteme umfasst, von denen das erste die Betätigung der zweiten Kupplung (41) und die Umschaltung der von der ersten Primärwelle (20) abhängigen Gänge sicherstellt, und von denen das zweite die Betätigung der ersten Kupplung (40) und die Umschaltung der von der zweiten Primärwelle (30) abhängigen Gänge sicherstellt.

2. Steuervorrichtung nach Anspruch 1, **dadurch gekennzeichnet, dass** sie zwei Achsen (270, 280) umfasst, die mit Klauen (271, 281) zur Betätigung der Kupplungen (40, 41) versehen sind, die von denselben Steuerfingern (211, 221) wie die Gabeln (230, 240, 250, 260) betätigt werden.

3. Steuervorrichtung nach Anspruch 1 oder 2, **dadurch gekennzeichnet, dass** die Gabeln direkt von Steuerfingern (211, 221) oder über Kippmechanismen (290, 291) betätigt werden.

4. Steuervorrichtung nach den Ansprüchen 1, 2 oder 3, **dadurch gekennzeichnet, dass** das erste Steuersystem die Umschaltung der Gänge ungeraden Ranges sicherstellt, und dass das zweite Steuersystem die Umschaltung der Gänge geraden Ranges sicherstellt.

5. Steuervorrichtung nach einem der vorhergehenden Ansprüche, **dadurch gekennzeichnet, dass** die Steuerfinger (211, 221) in Translation verschoben werden, um in Übergangsklauen der Gänge (252, 262), von Übergangskippeinrichtungen (290, 291) oder von einer Kupplungssteuerung (271, 281, 221) einzugreifen, und in Drehung verschoben werden, um die Gänge einzukuppeln oder die Kupplungen zu betätigen.

6. Steuervorrichtung nach Anspruch 5, **dadurch gekennzeichnet, dass** die Steuerklauen der Kupplung (271, 281) zwischen zwei Übergangsklauen der Gänge (252, 262) und den Kippeinrichtungen (290, 291) angeordnet sind.

7. Steuervorrichtung für ein Getriebe mit zwei Kupplungen nach Anspruch 1 oder 5, **dadurch gekennzeichnet, dass** sie einen ersten neutralen Auswahlzwischenraum (N1) zwischen den Übergangsklauen der Gänge (252, 262) und den Steuerklauen der Kupplung (271, 281) und einen zweiten neutralen Auswahlzwischenraum (N2) zwischen den Übergangskippeinrichtungen der Gänge (290, 291) und den Steuerklauen der Kupplung (271, 281) aufweist.

8. Steuerverfahren für ein Getriebe mit Hilfe einer Vorrichtung nach einem der vorhergehenden Ansprüche, **dadurch gekennzeichnet, dass** eine Sequenz vom Typ Übergang von einem gegebenen Gang in den unmittelbar höheren Gang eine Folge von Dreh- und Translationsbewegungen ist, die die beiden Betätigungseinrichtungen einsetzen, so dass sich am Anfang jeder Sequenz die Finger der beiden Betätigungseinrichtungen (211, 221) auf der Auswahllinie der beiden Steuerklauen von Kupplungen (271, 281) in Ruhestellung befinden und die beiden Kupplungen (40, 41) geschlossen sind, und dass sich am Ende der Sequenz die Finger der beiden Betätigungseinrichtungen (211, 221) wieder auf der Auswahllinie der beiden Steuerklauen einer Kupplung (271, 281) in Ruhestellung befinden und die beiden Kupplungen (40, 41) geschlossen sind.

9. Steuerverfahren nach Anspruch 8, **dadurch gekennzeichnet, dass** eine Sequenz vom Typ Übergang von einem Gang N ungeraden Ranges zu einem unmittelbar höheren Gang N+1 geraden Ranges folgende ist:
a) während der Motor das Fahrzeug mit dem Gang N antreibt
• öffnet das erste Steuersystem (210) die für die Gänge geraden Ranges bestimmte Kupplung (41),
• wählt das zweite Steuersystem (220) die Linie der Gänge X-N+1 aus und kuppelt den Gang N+1 ein,
• wählt das zweite Steuersystem (220) die neutrale Zwischenlinie (N1 oder N2) aus, richtet den Finger aus und wählt die Linie E₁-E₂ der Klauen (271, 281) aus,
b) die zentrale Steuereinheit der Betätigungseinrichtungen ändert den Gang:
• das zweite Steuersystem (220) öffnet die erste Kupplung (40), und
• gleichzeitig schließt das erste Steuersystem (210) die zweite Kupplung (41),
c) die zentrale Steuereinheit der Betätigungseinrichtungen kuppelt den Gang N aus:
• das erste Steuersystem wählt die neutrale Zwischenlinie (N1 oder N2) aus, richtet den Steuerfinger aus und wählt die Linie Y-N,
• das erste Steuersystem (210) kuppelt den Gang N aus,
• das erste Steuersystem wählt die Linie der Kupplungen aus, und
• das zweite Steuersystem schließt die erste Kupplung (40).
